# FASCICULE DE BREVET EUROPEEN

(11) **EP 0 717 349 B1**
(45) Date de publication et mention de la délivrance du brevet: **02.11.2000**
(21) Numéro de dépôt: 95402799.1
(22) Date de dépôt: 12.12.1995
(51) Int. Cl.: G06F 5/06, G06F 7/62

(54) **Dispositif de gestion d'une mémoire FIFO**
Anordnung zur Verwaltung eines FIFO-Speichers
FIFO memory management device

(30) Priorité: 15.12.1994 FR 9415121
(43) Date de publication de la demande: 19.06.1996
(73) Titulaire: MHS, 44087 Nantes Cédex 03 (FR)
(72) Inventeur: Coloma, Bernard, F-44000 Nantes (FR)
(74) Mandataire: Fréchède, Michel

(56) Documents cités:
- EP-A- 0 421 627
- US-A- 5 021 994
- WESCON TECHNICAL PAPERS, vol. 36, 17 - 19 Novembre 1992 NORTH HOLLYWOOD US, pages 174-178, XP 000350089 C. HASTINGS ET AL. 'Future trends in FIFO architectures'

## Description

L'invention concerne un dispositif de gestion d'une mémoire de type FIFO.

Une mémoire FIFO, utilisée couramment dans les systèmes informatiques, est une mémoire double port, comportant un port dédié à l'écriture et un port dédié à la lecture. Du point de vue de son fonctionnement, une telle mémoire se comporte en fait comme une file d'attente pour laquelle l'adressage du plan mémoire est engendré en interne par deux compteurs, un compteur des opérations d'écriture et un compteur des opérations de lecture. Pour gérer l'occupation de la mémoire, il est nécessaire d'utiliser des messages de type drapeau, connus sous le nom de "flags" en langage anglo-saxon.

D'une manière générale, les drapeaux utilisés sont :
- le drapeau EF, indiquant que la mémoire est vide ;
- le drapeau FF, indiquant que la mémoire est pleine ;
- le drapeau HF, indiquant que la mémoire est à moitié pleine.

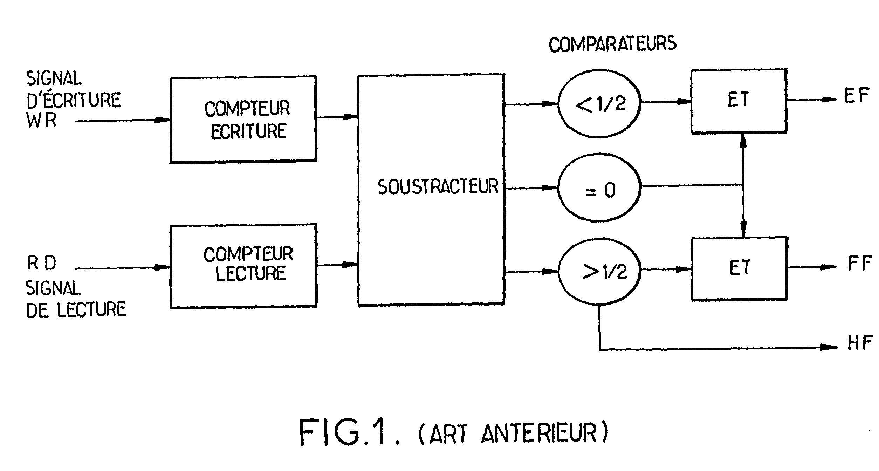

Dans les modes de réalisation courants connus de l'art antérieur, tels que représentés en figure 1, deux compteurs, un compteur d'écriture et un compteur de lecture permettent d'engendrer deux pointeurs, lesquels comptabilisent le nombre d'écritures et le nombre de lectures. Un circuit soustracteur permet de calculer la différence entre ces deux pointeurs. Si cette différence est nulle, cela implique que les pointeurs sont identiques et la mémoire est finalement soit pleine soit vide. Un décodage de la valeur de cette différence permet d'obtenir un drapeau, tel que le drapeau HF par exemple.

D'une manière pratique, on indique que le processus de calcul utilisé est un processus série dans lequel les temps de calcul et de propagation d'un compteur, d'un soustracteur et d'un comparateur sont cumulés. Le rythme de calcul correspondant est extrêmement lent en raison des cumuls précités, et le volume de calcul est d'autant plus important que le nombre de bits est important, et donc dépend de la capacité de la mémoire FIFO.

Une amélioration de la vitesse de calcul peut être réalisée et les drapeaux EF et FF peuvent être obtenus plus rapidement en soumettant les deux pointeurs à une opération logique de type OU exclusif. Dans un tel mode opératoire, il est toutefois nécessaire de connaître la valeur d'un autre drapeau afin de pouvoir ensuite différencier ces derniers.

Enfin, d'autres systèmes de gestion d'une mémoire FIFO, fonctionnant de manière synchrone à partir d'un signal d'horloge, ont été décrits dans l'art antérieur, notamment par la demande de brevet EP-A-0 421 627. Le système de gestion d'une mémoire FIFO décrit par ce document comporte uniquement deux voies correspondant à une opération d'écriture respectivement de lecture pilotées de manière synchrone. L'existence d'une troisième voie, correspondant sensiblement à la gestion d'un état métastable d'occurrence simultanée d'une impulsion d'écriture et d'une impulsion de lecture n'est pas nécessaire, du fait du fonctionnement synchrone.

La présente invention a pour but de remédier aux inconvénients précités, afin d'améliorer nettement la vitesse de calcul des drapeaux, et, ainsi, le fonctionnement de la mémoire.

Un autre objet de la présente invention est également la mise en oeuvre d'un dispositif de gestion d'une mémoire FIFO dans lequel un calcul parallèle et anticipé des drapeaux d'état d'occupation de la mémoire, d'un accès à l'autre à la mémoire, est effectué, ce qui permet d'améliorer notablement la vitesse de calcul globale des drapeaux d'état d'occupation de la mémoire.

Le dispositif de gestion d'une mémoire de type FIFO comportant un port de commande d'accès en lecture et un port de commande d'accès en écriture, par l'intermédiaire d'un signal de commande en lecture respectivement en écriture, objet de la présente invention, est remarquable en ce qu'il comprend un circuit de calcul et de mémorisation des différents états possibles de l'accès suivant à la mémoire et de sélection, parmi ces états, de l'état d'accès courant sous forme d'un message d'état courant. Un circuit de décodage du message d'état courant permet d'engendrer un drapeau indicateur de l'état de la mémoire, et un circuit de commande à partir du signal de commande en lecture et en écriture permet la commande du circuit de calcul et de sélection.

Le dispositif de gestion d'une mémoire FIFO, objet de la présente invention, trouve application à la fabricade circuits intégrés utilisés pour la réalisation de matériel informatique.

Il sera mieux compris à la lecture de la description et à l'observation des dessins ci-après dans lesquels, outre la figure 1 relative à l'art antérieur,
- la figure 2a représente un schéma synoptique, relatif à un plan de bit, du dispositif de gestion d'une mémoire FIFO, objet de la présente invention ;
- la figure 2b représente un détail de réalisation d'un élément multiplexeur mis en oeuvre par le dispositif de gestion d'une mémoire FIFO tel que représenté en figure 2a ;
- les figures 3a, 3b et 3c représentent un schéma synoptique de détails de réalisation d'un circuit de contrôle permettant d'engendrer des signaux de contrôle utilisés par le dispositif de gestion d'une mémoire FIFO tel que représenté en figure 2a ;
- la figure 4 représente des chronogrammes de signaux relevés en des points de test remarquables des figures 2a ou 2b.

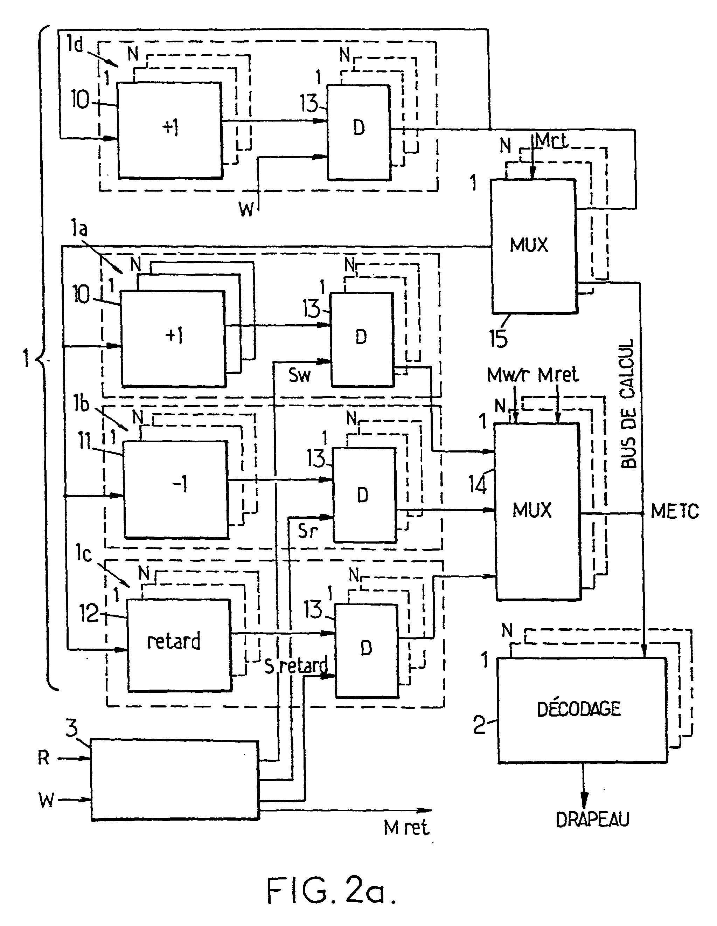

Une description plus détaillée d'un dispositif de gestion d'une mémoire FIFO conforme à l'objet de la présente invention, sera maintenant donnée en liaison avec la figure 2a et les figures suivantes.

D'une manière générale, on rappelle qu'une mémoire de type FIFO comprend un port de commande d'accès en lecture et un port de commande d'accès en écriture, les accès en lecture et en écriture étant effectués par l'intermédiaire d'un signal de commande en lecture, noté R, respectivement en écriture, noté W.

Ainsi qu'on l'a en outre représenté en figure 2a, le dispositif de gestion d'une mémoire de type FIFO selon l'invention comprend un circuit 1 de calcul et de mémorisation des différents états possibles de l'accès suivant à la mémoire considérée et de sélection parmi ces états de l'état d'accès courant sous forme d'un message d'état courant. Le message d'état courant, noté METC, est délivré en sortie du circuit de calcul 1. Le dispositif selon l'invention comporte également un circuit 2 de décodage du message d'état courant METC pour engendrer un drapeau indicateur de l'état de la mémoire considérée.

Enfin, le dispositif de gestion d'une mémoire de type FIFO selon l'invention comprend, ainsi que représenté sur la figure 2a précitée, un circuit 3 de commande à partir du signal de commande en lecture R et du signal de commande en écriture W, un circuit 3 de commande du circuit 1 de calcul précédemment cité.

D'une manière générale, ainsi que représenté sur la figure 2a précitée, on indique que le circuit 1 de calcul et de mémorisation des différents états possibles comporte au moins une première voie, notée 1a, d'incrémentation d'accès en écriture, comprenant, connectés en cascade, un circuit additionneur d'un incrément d'une unité, portant la référence 10, et un circuit de mémorisation de type bascule bistable, portant la référence 13. Le circuit de mémorisation de type bascule bistable est commandé par un signal de sélection d'écriture, noté SW, conditionnel du signal de commande en écriture W précédemment cité.

En outre, le circuit 1 de calcul comporte une deuxième voie, notée 1b, de décrémentation d'accès en lecture comprenant, connectés en cascade, un circuit soustracteur d'un incrément d'une unité, noté 11, et un circuit de mémorisation de type bascule bistable, noté 13, commandé par un signal de sélection SR de lecture conditionnel du signal de commande en lecture R précédemment cité.

Enfin, le circuit 1 de calcul comporte également une troisième voie, noté 1c, de maintien en l'état précédent, cet état correspondant en une commande d'accès en lecture et en écriture simultané de la mémoire correspondante. La troisième voie 1c comprend, connectés en cascade, un circuit de retard d'un cycle de calcul de la première ou de la deuxième voie, noté 12, et un circuit de mémorisation de type bascule bistable, noté 13, commandé par un signal de sélection de retard, noté Sretard, conditionnel du signal de commande en lecture et du signal de commande en écriture R, W précédemment mentionnés.

Sur la figure 2a, on notera que les bascules bistables de la première, la deuxième et la troisième voie, 1a, 1b, 1c, portent la même référence 13, ces bascules bistables étant de type identique et pouvant de ce fait porter la même référence.

On notera en outre, sur la même figure 2a, cette figure étant relative à un plan de bit pour des signaux numériques donnés, qu'en fait, chacun des éléments constitués par circuit additionneur d'un incrément 10, circuit soustracteur d'un incrément 11 et circuit de retard 12 ainsi que bascule bistable portant la référence 13 de chacune des voies précitées, est multiplié par le nombre de bits sur lequel chaque mot du signal numérique est codé, afin d'assurer bien entendu le traitement en parallèle bit à bit de chacun des mots considérés. Par convention, on indique que les mots sont codés sur N bits, chacun des éléments de traitement pour le bit de rang correspondant étant représenté en pointillés. Il en est de même pour tous les éléments des plans de bits différents, tel que représenté sur la figure 2a.

Enfin, ainsi qu'on pourra l'observer sur la figure précitée, le circuit 1 de calcul comprend un circuit multiplexeur 14 recevant, en entrée de multiplexage le signal délivré par la première la, la deuxième 1b, et la troisième voie 1c, et, sur une entrée de commande, un signal de sélection du message d'état courant METC, ce message étant délivré en sortie du circuit multiplexeur 14 précité. On notera bien sûr que le message d'état courant METC est délivré en outre à l'entrée de la première 1a, de la deuxième 1b et de la troisième voie 1c et, d'autre part au circuit de décodage 2 précédemment mentionné. Bien entendu, le circuit multiplexeur 14 comporte également N circuits correspondants, permettant d'assurer le multiplexage des bits délivrés par la première, la deuxième et la troisième voie pour chacun des bits de rang correspondants. Le message d'état courant METC est ainsi délivré sur un BUS, désigné par BUS de calcul, ce message servant à déterminer le drapeau par décodage ainsi qu'à réaliser le calcul de tous les états possibles de l'accès suivant par rapport à l'accès précédent ou actuel par l'intermédiaire de la première, la deuxième et de la troisième voie précédemment mentionnées.

Le fonctionnement du dispositif tel que représenté en figure 2a est le suivant : la première, la deuxième et la troisième voie 1a, 1b, 1c, permettent de calculer les différents états possibles de l'accès suivant, ces différents états possibles étant stockés par l'intermédiaire des bascules bistables 13 de chacune des voies correspondantes. Le circuit multiplexeur 14 permet de sélectionner la valeur de l'état présent du système, en nombre d'accès écriture ou lecture, et de délivrer le message d'état courant METC qui n'est autre que la valeur du drapeau, sous forme codée, sur le BUS de calcul précédemment mentionné.

Sur le BUS de calcul précité, on dispose donc en permanence, à chaque cycle de calcul, du message d'état courant METC, lequel représente, sous forme codée, la différence entre le nombre d'accès en écriture W et le nombre d'accès en lecture R effectués au niveau de la mémoire FIFO considérée.

Dans le cas où tous les bits du message d'état courant METC sont à la valeur O, alors, la mémoire FIFO est vide et un drapeau de type EF, représentatif de l'état vide de la mémoire, peut être donc rendu actif.

Si au contraire, le bit de poids fort du message d'état courant est à 1, la mémoire FIFO correspondante est donc pleine et le drapeau FF représentatif de cet état pour la mémoire FIFO peut alors être engendré.

Bien entendu, on indique que le circuit 1 de calcul peut comporter, ainsi qu'il sera décrit ci-après, un circuit dit de gestion de retenue permettant d'engendrer le drapeau FF précité. On comprend également que ce circuit de gestion de retenue n'est pas nécessairement indispensable dans la mesure où il peut être envisagé, le cas échéant, de détecter l'état plein de la mémoire FIFO à partir du message d'état courant METC et, le cas échéant, d'une nouvelle incrémentation par l'intermédiaire du circuit additionneur d'un incrément 10 par exemple.

Toutefois, et afin d'assurer un meilleur mode opératoire du dispositif de gestion d'une mémoire FIFO selon l'invention, on indique que le circuit 1 de calcul peut comporter en outre, ainsi que représenté sur la figure 2a, un autre circuit multiplexeur, noté 15, recevant en entrée de multiplexage le message d'état courant METC et un signal de sélection Mrt, lui-même conditionnel du signal de mise à zéro du compteur lecture. Le circuit multiplexeur 15 reçoit alors, à partir d'une quatrième voie d'incrémentation d'accès en retenue, notée 1d, et comprenant, connectés en cascade, un circuit additionneur d'un incrément 10 et un circuit de mémorisation de type bascule bistable portant la référence 13, le circuit de type bascule bistable 13 de la quatrième voie 1d étant lui-même commandé par le signal de commande d'écriture W, un signal représentatif du nombre d'accès en écriture de la mémoire FIFO considérée.

On comprend bien sûr que non seulement le circuit additionneur d'un incrément 10 mais également le circuit de type bascule bistable 13 de la quatrième voie 1d portent les mêmes références numériques que les circuits correspondants de la première voie 1a, en raison du fait que ces circuits présentent la même structure, et, finalement remplissent une fonction analogue, la quatrième voie 1d étant simplement dédiée au calcul de l'état du nombre total d'accès en écriture et non plus au calcul de l'état correspondant à un accès en écriture comme l'est la première voie 1a.

Ainsi, la voie 1d délivre un signal représentatif du nombre d'accès en écriture effectivement réalisés. Ce comptage est effectué par la voie 1d mémorisant en permanence le nombre d'accès en écriture à partir par exemple du signal de commande d'accès en écriture W, et la valeur du nombre d'écritures ainsi réalisées peut être transmise, lors d'une relecture de la mémoire FIFO considérée, c'est-à-dire lors de la remise à zéro du compteur de lecture de cette mémoire par l'intermédiaire du multiplexeur 15, sur le BUS de calcul.

Compte tenu de la structure du circuit de calcul 1 tel que représenté en figure 2a, on indique que le message d'état courant METC représente donc une valeur codée de l'état de la mémoire FIFO considérée et qu'en particulier, la valeur réelle de l'état de la mémoire FIFO précitée peut être représentée par tout drapeau obtenu par décodage à partir du message d'état courant METC précité. Ainsi, à chaque opération d'accès en écriture par l'intermédiaire du signal d'écriture W ou en lecture par l'intermédiaire du signal de lecture R, la valeur correspondante du message d'état courant METC est engendrée par l'intermédiaire des circuits bascule bistable 13 de la première, de la deuxième, de la troisième et, lorsque celle-ci est utilisée, de la quatrième voie, par l'intermédiaire du multiplexeur 14 précédemment mentionné.

Les trois états possibles suivants sont alors calculés à partir de l'état précédent :
- un accès en écriture : incrémentation de la valeur codée et donc du message d'état courant METC sur le BUS de calcul,
- un accès en lecture : décrémentation de cette même valeur précitée,
- un accès lecture et un accès en écriture simultanés : la valeur du message d'état courant METC précédente est conservée, l'occupation globale de la mémoire FIFO, en raison de l'accès simultané à la mémoire en lecture et en écriture, étant inchangée.

Le message d'état courant METC est délivré au circuit de décodage 2, lequel permet alors d'engendrer la valeur du drapeau correspondant représentatif de l'état d'occupation de la mémoire FIFO considérée.

Le circuit de décodage 2 peut avantageusement être réalisé par un circuit de transcodage par exemple, recevant comme donnée d'entrée le message d'état courant METC. Ce circuit de décodage reçoit alors le message d'état courant METC ou le nombre d'accès en écriture effectués. La table de transcodage constituant le circuit de décodage 2, pour un comptage jusqu'à huit codé sur quatre bits, permet alors de délivrer les drapeaux successifs représentatifs de l'état de la mémoire, selon le tableau ci-après pour les drapeaux vide EF, moitié vide HF et mémoire FIFO pleine FF :

| NOMBRES D'ECRITURES | ETAT DU BUS | DRAPEAUX | | |
|---|---|---|---|---|
| | | EF | HF | FF |
| 0 | 0000 | 0 | 1 | 1 |
| 1 | 0001 | 1 | 1 | 1 |
| 2 | 0010 | | | |
| 3 | 0011 | | | |
| 4 | 0100 | 1 | 1 | 1 |
| 5 | 0101 | 1 | 0 | 1 |
| 6 | 0110 | | | |
| 7 | 0111 | 1 | 0 | 1 |
| 8 | 1000 | 1 | 0 | 0 |

La valeur du drapeau FF découle directement de l'état du quatrième bit du BUS de calcul, lequel a donc en fait une valeur de retenue, c'est-à-dire de la valeur du message d'état courant METC. Bien entendu, il est possible, en lieu et place d'une table de transcodage, d'utiliser une logique de décodage du message d'état courant METC. La logique de décodage du drapeau EF est particulière car les fronts actifs des signaux d'accès en écriture W et en lecture R, pour ces drapeaux, sont l'inverse des autres drapeaux.

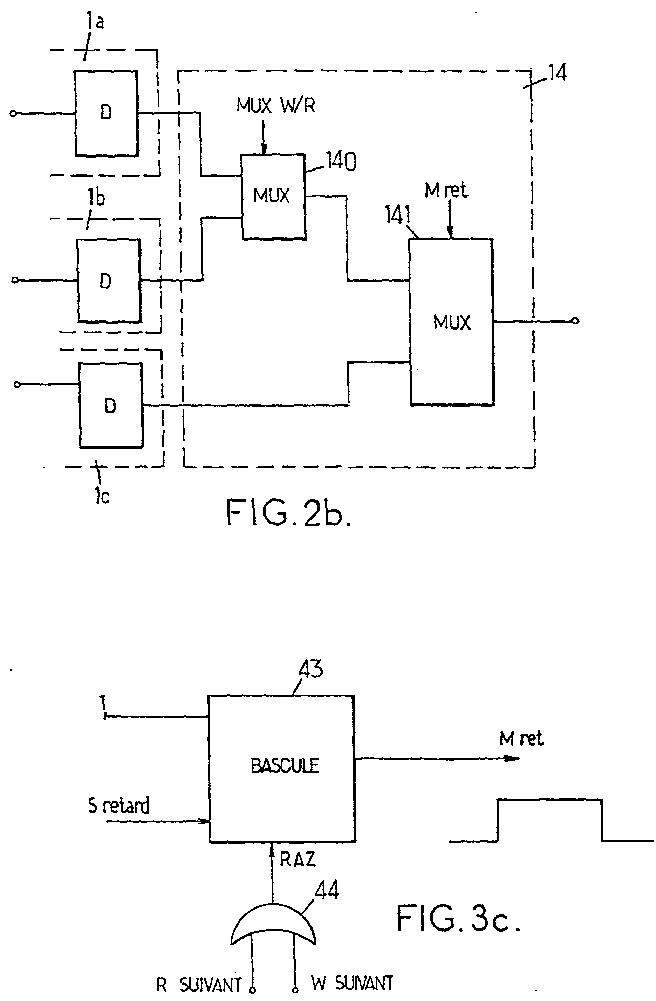

Une description plus détaillée du multiplexeur 14 sera maintenant donnée en liaison avec la figure 2b.

Ainsi que représenté sur la figure précitée, le multiplexeur 14 peut être constitué en fait par deux multiplexeurs, portant la référence 140 et 141, connectés en cascade. Les entrées de multiplexage du premier multiplexeur 140 reçoivent les signaux délivrés par la première et la deuxième voie 1a, 1b, alors qu'une autre entrée de multiplexage du multiplexeur 141 reçoit le signal délivré par la troisième voie 1c. Le premier multiplexeur 140 est commandé par un signal de commande de multiplexage écriture/lecture, ce signal étant noté MUX W/R.

Du point de vue du fonctionnement, on indique que le multiplexeur 140 permet de sélectionner la voie 1 ou la voie 2, alors que le multiplexeur 141, commandé par un signal de commande de multiplexage conditionnel à l'existence d'un accès simultané en écriture et lecture de la mémoire FIFO considérée, ce signal de commande de multiplexage étant noté MRet, permet au contraire de sélectionner, soit la sortie du premier multiplexeur 140, soit au contraire la sortie de la troisième voie 1c.

En ce qui concerne la réalisation du circuit de calcul 1 tel que représenté en figure 2a, on indique que les circuits additionneurs d'incrémentation ou de décrémentation 10 et 11 peuvent être constitués par un additionneur et un soustracteur rapides respectivement, le circuit 12 de retard peut être réalisé par l'intermédiaire d'un circuit de retard de type RC. Les circuits de type bascule 13 peuvent être réalisés de manière classique. De préférence, l'ensemble est réalisé sous forme de circuit intégré.

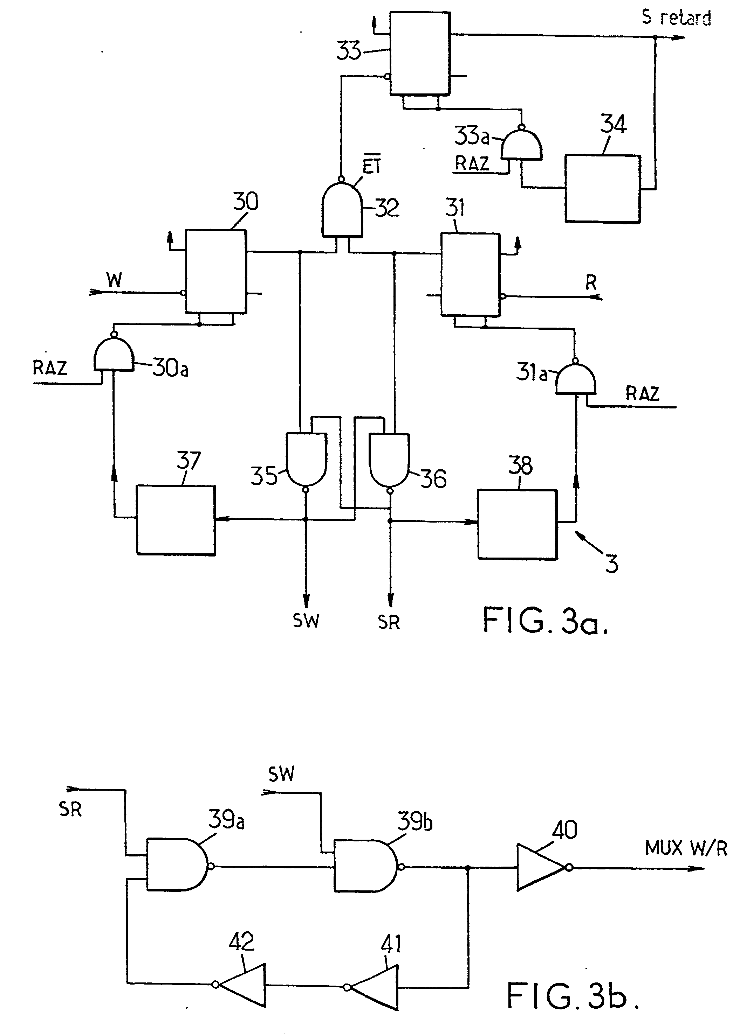

Une description plus détaillée d'éléments constitutifs du circuit de commande 3 sera maintenant donnée en liaison avec les figures 3a, 3b et 3c.

On rappelle que le circuit de commande 3 permet en fait d'engendrer l'ensemble des signaux de sélection d'écriture, de lecture, ou de retard, conditionnels à l'existence d'un accès en écriture, en lecture respectivement en lecture/écriture simultanés, ainsi que mentionné précédemment dans la description.

En ce qui concerne les signaux de sélection d'écriture SW et de lecture SR précédemment cités, on indique, ainsi que représenté en figure 3a, que le circuit de commande 3 comprend un module générateur des signaux conditionnels précités SW et SR.

Le module générateur peut comprendre une bascule bistable 30 actionnée par le signal d'accès en écriture W et une bascule bistable 31 actionnée par le signal d'accès en lecture R. Les bascules bistables 30 et 31 sont remises à zéro par un signal de remise à zéro RAZ par l'intermédiaire d'une porte de type NON-ET 30a respectivement 31a. La sortie des bascules bistables 30 et 31 est reliée à une porte NON-ET 32, laquelle délivre un signal représentatif de la simultanéité d'accès en écriture et en lecture de la mémoire FIFO considérée. Le signal délivré par la porte logique NON-ET 32 est délivré à une bascule bistable 33, laquelle permet de délivrer le signal de sélection de retard conditionnel du signal de commande en lecture et du signal de commande en écriture précités. La remise à zéro de la bascule 33 est effectuée par l'intermédiaire d'une porte de type NON-ET 33a, laquelle reçoit sur une de ses entrées le signal de remise à zéro RAZ et sur une autre entrée le signal Sretard de sélection de retard précité par l'intermédiaire d'un circuit de retard 34.

En outre, le module précité comprend une porte logique de type NON-ET 35, laquelle reçoit sur une de ses entrées la sortie de la bascule 30, la porte NON-ET 35 délivrant le signal de sélection d'écriture SW précité.

Il en est de même pour la bascule bistable 31 dont la sortie est reliée à une porte NON-ET 36, laquelle délivre le signal de sélection de lecture SR conditionnel du signal de commande en lecture R.

Ainsi que représenté sur la figure 3a, la sortie de la porte NON-ET 36 est reliée à une deuxième entrée de la porte NON-ET 35 et, réciproquement, la sortie de la porte NON-ET 35 est reliée à une entrée de la porte NON-ET 36.

En outre, on indique que les portes 30a et 31a de type NON-ET permettant d'effectuer la remise à zéro des bascules bistables 30 et 31 respectivement, reçoivent sur une de leur entrée le signal de remise à zéro RAZ précité et, sur une autre de leur entrée, le signal SW pour la porte NON-ET 30a par l'intermédiaire d'un circuit de retard 37, et le signal SR pour la porte NON-ET 31a par l'intermédiaire d'un circuit de retard 38 pour la bascule bistable 31.

Ainsi que représenté en outre sur la figure 3b, le circuit de commande 3 comprend un module permettant d'engendrer le signal de commande de multiplexage du premier multiplexeur 140 tel que représenté en figure 2a ou 2b.Le module précité comprend, ainsi que représenté sur la figure 3b, une première porte de type NON-ET 39a connectée en cascade à une deuxième porte de type NON-ET 39b, la sortie de la deuxième porte NON-ET 39b étant rebouclée sur une entrée de la première porte NON-ET 39a par l'intermédiaire de deux circuits inverseurs 41 et 42 qui ont pour objet de compenser le temps de propagation des signaux en travers les portes NON-ET 39a et 39b. Une deuxième entrée des portes NON-ET 39a et 39b reçoit le signal de sélection en lecture SR et en écriture SW respectivement. La sortie de la porte NON-ET 39b délivre à un circuit inverseur 40 un signal, ce signal inversé par le circuit inverseur 40 constituant le signal de commande de multiplexage MUX W/R délivré en commande du circuit multiplexeur 140.

Enfin, le circuit de commande 3 comporte également un module générateur du signal de commande de multiplexage du deuxième multiplexeur 141, ce signal étant désigné par Mret sur la figure 2a ou 2b.

Ce module comprend un circuit de type bascule bistable 43, lequel reçoit sur l'une de ses entrées le signal de sélection de retard Sretard précédemment mentionné. La bascule 43 reçoit par l'intermédiaire d'une porte de type OU 44 un signal de remise à zéro RAZ, la porte OU 44 recevant elle-même sur une première entrée, un signal de commande en lecture suivant et, sur une deuxième entrée, le signal de commande en écriture suivant. La bascule bistable 43 délivre le signal Mret permettant la commande de multiplexage du multiplexeur 141.

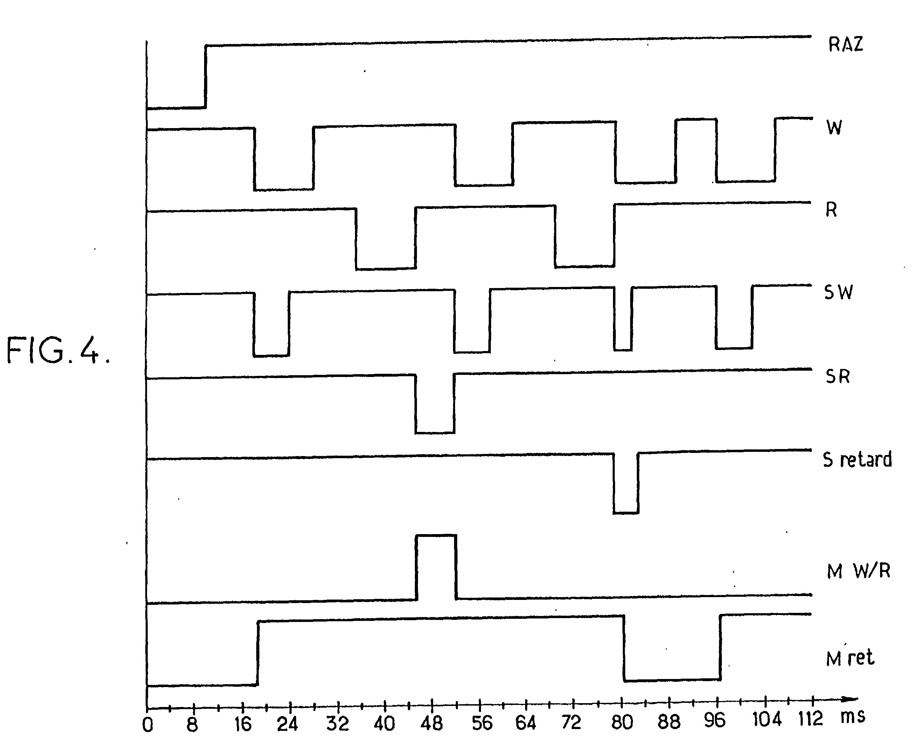

Un chronogramme de l'ensemble des signaux précédemment décrits en liaison avec la figure 2a, 2b et 3a à 3c est représenté en figure 4.

En ce qui concerne le signal de remise à zéro RAZ, on indique que ce signal est actif à zéro. En outre, le signal d'accès en écriture W est actif sur son front descendant. Au contraire, le signal d'accès en lecture R est actif sur son front montant. Le signal de sélection d'écriture SW est un signal actif au niveau bas et il en est de même pour le signal de sélection de lecture SR.

Enfin, on indique qu'en ce qui concerne le signal de commande de multiplexage Mret, celui-ci permet la sélection de la troisième voie lc, lors d'un accès simultané en écriture et lecture à la mémoire FIFO considérée, ce signal effectuant une commande prioritaire du multiplexeur 141 sur la commande du multiplexeur 140.

On a ainsi décrit un dispositif de gestion d'une mémoire de type FIFO particulièrement performant dans la mesure où, par un calcul en parallèle de tous les états possibles suivant un état précédent, le calcul de l'état courant actuel suivant l'état précédent peut être effectué avec une vitesse de calcul notablement améliorée.

## Revendications

1. Dispositif de gestion d'une mémoire de type FIFO, comportant un port de commande d'accès en lecture et un port de commande d'accès en écriture, par l'intermédiaire d'un signal de commande en lecture (R) respectivement en écriture (W), caractérisé en ce qu'il comporte :
- des moyens (1) de calcul et de mémorisation des différents états possibles de l'accès suivant à ladite mémoire, et de sélection, parmi ces états, de l'état d'accès courant sous forme d'un message d'état courant (METC), lesdits moyens (1) de calcul et de mémorisation des différents états possibles comportant au moins :
- une première voie (la) d'incrémentation d'accès en écriture comprenant, connectés en cascade, un circuit (10) additionneur d'un incrément d'une unité et un circuit (13) de mémorisation de type bascule bistable, commandé par un signal (SW) de sélection d'écriture conditionnel à l'existence du signal de commande en écriture (W),
- une deuxième voie (1b) de décrémentation d'accès en lecture comprenant, connectés en cascade, un circuit (11) soustracteur d'un incrément d'une unité et un circuit (13) de mémorisation de type bascule bistable, commandé par un signal (SR) de sélection de lecture conditionnel à l'existence du signal de commande en lecture (R),
- une troisième voie (lc) de maintien en l'état précédent, correspondant en une commande d'accès en lecture et en écriture simultanés de ladite mémoire comprenant, connectés en cascade, un circuit (12) de retard d'une période d'horloge et un circuit (13) de mémorisation de type bascule bistable commandé par un signal (S retard) de sélection de retard conditionnel à l'existence du signal de commande en lecture (R) et du signal de commande en écriture (W),
- un circuit multiplexeur (14) recevant en entrée de multiplexage le signal délivré par la première (la), la deuxième (1b) et la troisième voie (lc), et, sur une entrée de commande, un signal de sélection du message d'état courant (METC), ledit message d'état courant (METC) étant délivré en sortie dudit circuit multiplexeur à l'entrée de la première (1a), de la deuxième (1b) et de la troisième voie (1c) ;
- des moyens (2) de décodage dudit message d'état courant recevant ce message d'état courant (METC) pour engendrer un drapeau indicateur de l'état de ladite mémoire ;
- des moyens (3) de commande à partir dudit signal de commande en lecture (R) et en écriture (W) desdits moyens de calcul et de sélection, lesdits moyens (3) de commande comprenant :
- un module (3a) générateur des signaux de sélection d'écriture et de lecture conditionnels du signal d'écriture et du signal de lecture respectivement ;
- un module (3b) générateur du signal de commande de multiplexage écriture/lecture (MUX W/R) ;
- un module (3c) générateur du signal de commande de multiplexage (Mret) conditionnel à l'existence d'un accès simultané en écriture et en lecture.

2. Dispositif selon la revendication 1, caractérisé en ce que lesdits moyens (1) de calcul comportent en outre, connectés entre la sortie dudit circuit multiplexeur (14) et l'entrée de la première (1a), de la deuxième (1b) et de la troisième voie (1c) :
- un autre circuit multiplexeur (15) recevant en entrée de multiplexage ledit message d'état courant (METC) et un signal (Mrt) représentatif du nombre d'accès en écriture effectivement réalisés, et, sur une entrée de commande, un signal de sélection conditionnel du signal de remise à zéro du compteur de lecture,
- une quatrième voie (1d) de comptage d'accès en écriture effectivement réalisés, comprenant, connectés en cascade, un circuit (10) additionneur d'un incrément et un circuit (13) de mémorisation de type bascule bistable, commandé par ledit signal de commande d'écriture (W), ce qui permet de mémoriser en permanence le nombre d'accès en écriture effectués sur la mémoire FIFO depuis un état initial.

3. Dispositif selon la revendication 1, caractérisé en ce que ledit circuit multiplexeur (14) est formé par :
- un premier multiplexeur (140) recevant en entrée de multiplexage le signal délivré par la première (1a) et la deuxième voie (1b), et, sur une entrée de commande de multiplexage, ledit signal de commande de multiplexage écriture/lecture (MUX W/R);
- un deuxième multiplexeur (141) recevant en entrée de multiplexage le signal délivré par le premier multiplexeur (140) et le signal délivré par la troisième voie (1c), et, sur une entrée de commande de multiplexage, ledit signal de commande de multiplexage (Mret) conditionnel à l'existence d'un accès simultané en écriture et en lecture.

## Claims

1. Management device for FIFO type memory, including a gate for read access control and a gate for write access control by means of a read access control (R) and a write access control (W) signal respectively, characterised by the fact that it includes:
• means (1) for calculating and storing different possible states of the next access to the said memory and for selecting, from these states, the current access state in the form of a current state message (METC), the said means (1) for calculating and storing the different possible states including at least:
• a first write access incrementation channel (la) comprising, connected in cascade, a circuit (10) for adding a unit increment and a storage circuit (13) of bistable flip-flop type, controlled by a write selection signal (SW) conditional on the existence of the write control signal (W),
• a second read access decrementation channel (1b) comprising, connected in cascade, a circuit (11) for subtraction of a unit increment and a storage circuit (13) of bistable flip-flop type, controlled by a read selection signal (SR) conditional on the existence of the read control signal (R),
• a third channel (1c) for maintenance in the preceding state, corresponding to simultaneous read access and write access commands to the said memory comprising, connected in cascade, a circuit (12) for a delay of one clock cycle and a storage circuit (13) of bistable flip-flop type controlled by a delay selection signal (S retard) conditional on the existence of the read control sign (R) and the write control signal (W),
• a multiplexing circuit (14) receiving at its multiplexing input the signal delivered by the first (la), the second (1b) and the third (1c) channel, and, at a control input, a signal for selection of the current state message (METC), the said current state message (METC) being delivered at the output of the said multiplexing circuit to the input of the first (la), the second (1b) and the third (1c) channels;
• means (2) for decoding the said current state message receiving this current state message (METC) to generate a flag indicating the state of the said memory;
• means (3) for control from the said read control (R) and write control (W) signal of the calculating and selecting means, the said control means (3) comprising:
• a module (3a) for generating write and read selection signals conditional on the write signal and the read signal respectively;
• a module (3b) for generating the write/read multiplexing control signal (MUX W/R);
• a module (3c) for generating the multiplexing control signal (Mret) conditional on the existence of a simultaneous write and read access.

2. Device as described in claim 1, characterised by the fact that the said calculating means (1) also include, connected between the output of the said multiplexing circuit (14) and the inputs of the first (la), second (1b) and third (lc) channels:
• another multiplexing circuit (15) receiving at its multiplexing input the said current state message (METC) and a signal (Mrt) representing the number of write accesses effectively performed and, at a control input, a selection signal conditional on the zeroing signal of the read counter,
• a fourth channel (ld) for counting the write accesses effectively performed, comprising, connected in cascade, a circuit (10) for addition of one increment and a storage circuit (13) of bistable flip-flop type, controlled by the said write control signal (W), which permits permanent storage of the number of write accesses performed on the FIFO memory since an initial state.

3. Device as described in claim 1, characterised by the fact that the said multiplexing circuit (14) is formed by:
• a first multiplexor (140) receiving at its multiplexing input the signal delivered by the first (1a) and the second (1b) channel, and, at a multiplexing control input, the said write/read multiplexing control signal (MUX W/R) ;
a second multiplexor (141) receiving at its multiplexing input the signal delivered by the first multiplexor (140) and the signal delivered by the third channel (1c), and, at a multiplexing control input, the said multiplexing control signal (Mret) conditional on the existence of a simultaneous write and read access.

## Patentansprüche

1. Vorrichtung zur Steuerung eines FIFO-Speichers mit einem Anschluß zur Steuerung eines Lesezugriffs und einem Anschluß zur Steuerung eines Schreibzugriffs mit Hilfe eines Steuersignals zum Lesen (R) bzw. zum Schreiben (W), dadurch gekennzeichnet, daß diese umfaßt:
- eine Einrichtung (1) zur Berechnung und Speicherung unterschiedlicher, dem Speicher entsprechender Zugriffszustände und zur Auswahl aus diesen Zuständen den laufenden Zugriffszustand in Form einer Mitteilung über den laufenden Zustand (METC), wobei die Einrichtung (1) zur Berechnung und zur Speicherung unterschiedlicher möglicher Zustände wenigstens umfaßt:
- einen ersten Pfad (la) zur Inkrementierung eines Schreibzugriffs mit, in Kaskade verbunden, einer Additionsschaltung (10) für ein Inkrement einer Einheit und einer Speicherschaltung (13) in Bauart eines bistabilen Kippgliedes, das durch ein Signal (SW) zur Auswahl eines Schreibvorgangs bedingt durch das Vorliegen des Schreib-Steuersignals (W) gesteuert wird,
- einen zweiten Pfad (1b) zur Dekrementierung eines Lesezugriffs mit, in Kaskade verbunden, einer Subtraktionsschaltung (11) für ein Inkrement einer Einheit und einer Speicherschaltung (13) in Bauart eines bistabilen Kippgliedes, das durch ein Signal (SR) zur Auswahl eines Lesevorganges bedingt durch ein Vorliegen des Lese-Steuersignals (R) gesteuert wird,
- einen dritten Pfad (1c) zur Beibehaltung eines vorausgehenden Zustands, der einer Steuerung eines gleichzeitigen Lese- und Schreibzugriffs auf den Speicher entspricht, mit, in Kaskade verbunden, einer Schaltung (12) zur Verzögerung um eine Zeitspanne und einer Speicherschaltung (13) in Bauart eines bistabilen Kippglieds, das durch ein Signal (S retard) zur Auswahl einer Verzögerung bedingt durch das Vorliegen des Lese-Steuersignals (R) und des Schreib-Steuersignal (W) gesteuert wird,
- eine Multiplexschaltung (14), die an einem Multiplexereingang das durch den ersten (la), den zweiten (1b) und den dritten Pfad (1c) gelieferte Signal und über einen Steuereingang ein Auswahlsignal der Mitteilung über den laufenden Zustand (METC) erhält, wobei die Mitteilung über den laufenden Zustand (METC) am Ausgang der Multiplexschaltung an den Eingang des ersten (la), des zweiten (1b) und des dritten Pfads (1c) geliefert wird;
- eine Einrichtung (2) zur Dekodierung der Mitteilung über den laufenden Zustand, die diese Mitteilung über den laufenden Zustand (METC) erhält, um ein Anzeigflag des Zustands dieses Speichers zu erzeugen;
- eine Einrichtung (3) zur Steuerung der Berechnungs- und Auswahl-Einrichtung ausgehend von dem Signal zur Steuerung eines Lesevorgangs (R) und eines Schreibvorgangs (W), wobei die Steuereinrichtung (3) umfaßt:
- ein Modul (3a) zur Erzeugung von Schreib- und Lese-Auswahlsignalen bedingt durch das jeweilige Schreibsignal und Lesesignal;
- ein Modul (3b) zur Erzeugung des Steuersignals für den Schreiben/Lesen-Multiplexvorgang (MUX W/R);
- ein Modul (3c) zum Erzeugen des Signals zur Steuerung des Multiplexvorgangs (Mret) bedingt durch das Vorliegen eines gleichzeitigen Schreib- und Lesezugriffs.

2. Vorrichtung nach Anspruch 1, dadurch gekennzeichnet, daß die Berechnungseinrichtung (1) ferner umfaßt, verbunden zwischen dem Ausgang der Multiplexschaltung (14) und dem Eingang des ersten (1a), des zweiten (1b) und des dritten Pfads (1c):
- eine weitere Multiplexschaltung (15), die am Multiplexeingang die Mitteilung über den laufenden Zustand (METC) und ein Signal (Mrt), das repräsentativ ist für die Anzahl der wirksam ausgeführten Schreibzugriffe, und über einen Steuereingang ein Auswahlsignal bedingt durch das Signal zur Rückstellung auf Null des Lesezählers erhält,
- einen vierten Weg (1d) zur Zählung der wirksam durchgeführten Schreibzugriffe mit, verbunden in Kaskade, einer Additionschaltung (10) für ein Inkrement und einer Speicherschaltung (13) in der Bauart eines bistabilen Kippglieds, das durch das Schreib-Steuersignal (W) gesteuert wird, was erlaubt, permanent die Anzahl bewirkter Schreibzugriffe auf den FIFO-Speicher seit einem Anfangszustand zu speichern.

3. Vorrichtung nach Anspruch 1, dadurch gekennzeichnet, daß die Multiplexschaltung (14) gebildet wird durch:
- einen ersten Multiplexer (140), der am Multiplexeingang das durch den ersten (1a) und den zweiten Pfad (1b) gelieferte Signal und über einen Steuereingang des Multiplexvorgangs das Steuersignal für das Schreiben/Lesen-Multiplexen (MUX W/R) erhält;
- einen zweiten Multiplexer (141), der am Multiplexeingang das durch den ersten Multiplexer (140) gelieferte Signal und das durch den dritten Pfad (1c) gelieferte Signal erhält und über einen Steuereingang des Multiplexvorgangs das Steuersignal für den Multiplexvorgang (Mret) bedingt durch das Vorliegen eines gleichzeitigen Schreib- und Lesezugriffs erhält.
